# EUROPÄISCHE PATENTSCHRIFT

(11) **EP 2 753 535 B1**
(45) Veröffentlichungstag und Bekanntmachung des Hinweises auf die Patenterteilung: **13.05.2020**
(21) Anmeldenummer: 12728236.6
(22) Anmeldetag: 14.06.2012
(51) Int. Cl.: B62D 29/00, B62D 27/02, F16B 11/00, B60N 2/68

(54) **HYBRIDBAUTEIL UND VERFAHREN ZUR HERSTELLUNG EINES HYBRIDBAUTEILS**
COMPOSITE STRUCTURAL ELEMENT AND PRODUCTION METHOD OF THE SAME
PIECE HYBRIDE DE STRUCTURE ET SON PROCÉDÉ DE PRODUCTION

(30) Priorität: 05.09.2011 DE 102011112298
(43) Veröffentlichungstag der Anmeldung: 16.07.2014
(73) Patentinhaber: Adient Luxembourg Holding S.à r.l., 1855 Luxembourg (LU)
(72) Erfinder: FLEISCHHEUER, Simon, 45470 Mühlheim an der Ruhr (DE); NDAGIJIMANA, Robin, 41469 Neuss (DE); MUND, Harald, 42697 Solingen (DE); FRISSE, Nils, 50825 Köln (DE); SARAVADE, Anup, 51379 Leverkusen (DE)
(74) Vertreter: Finger, Catrin
(86) Internationale Anmeldenummer: PCT/EP2012/061283
(87) Internationale Veröffentlichungsnummer: WO 2013/034323

(56) Entgegenhaltungen:
- EP-A1- 2 508 413
- EP-A2- 1 084 816
- WO-A1-01/58740
- WO-A1-2005/035339
- DE-A1-102008 013 506

## Beschreibung

Die Erfindung betrifft ein Hybridbauteil und ein Verfahren zur Herstellung eines Hybridbauteils.

Im Stand der Technik werden Strukturelemente insbesondere von Fahrzeugrücksitzen als Hybridbauteile aus miteinander verschweißten Stahl- und/oder Blechbauteilen gebildet.

Im Dokument EP 1 084 816 A2 wird ein Verfahren zur Herstellung eines Verbundbauteils beschrieben. Das Verbundbauteil besteht aus einem mit einer Verrippung versehenen Grundkörper aus Kunststoff, der partiell oder vollständig mit einem Verstärkungselement aus Metall oder verstärktem Kunststoff verbunden wird. Die Verbindung von Grundkörper und Verstärkungselement erfolgt in einem nachträglichen separaten Arbeitsschritt.

Im Dokument WO 2005/035339 A1 wird ein Hybridbauteil mit einem metallischen Grundkörper beschrieben, der zumindest teilweise mit einer Kunststoffstruktur versehen ist. Der metallische Grundkörper weist an seinem Randbereich ein angeformtes Fixierelement auf, anhand dessen die Kunststoffstruktur mit dem Grundkörper zumindest mechanisch fügbar ist.

Das Dokument DE 10 2008 013 506 A1 beschreibt ein Verfahren zur Herstellung eines Verbundbauteils aus wenigstens einem Formteil aus Metall und/oder Kunststoff, das in einem Spritzgießwerkzeug gefügt und form- und/oder stoffschlüssig mit sich selbst und/oder einem anderen Formteil verbunden wird, wobei das wenigstens eine Formteil beim Schließen des Spritzgießwerkzeugs gefügt wird.

Das Dokument WO 01/58740 A1 beschreibt ein Verfahren zum Verbinden eines ersten Bauteils aus einem Verbundmaterials mit einem zweiten Bauteil aus einem anderen Material. Das Verbundmaterial ist aus Fasern in einem Kunstharz zusammengesetzt. Das erste Bauteil weist flanschartige Randbereiche auf. Zwischen den flanschartigen Randbereichen und dem zweiten Bauteil erstreckt sich eine Klebstoffschicht. Die Fasern in den flanschartigen Randbereichen erstrecken sich bis in einen Bereich des ersten Bauteils außerhalb der flanschartigen Randbereiche.

Aufgabe der vorliegenden Erfindung ist es, ein gegenüber dem Stand der Technik verbessertes Hybridbauteil und ein verbessertes Verfahren zur Herstellung eines Hybridbauteils aus zumindest zwei dünnwandigen Bauteilen aus unterschiedlichen Werkstoffen unter Vermeidung einer großflächigen stoffschlüssigen Verbindung zwischen den Bauteilen und insbesondere unter Vermeidung von Oberflächenunebenheiten resultierend aus unterschiedlichen thermischen Ausdehnungen der unterschiedlichen Werkstoffe anzugeben.

Hinsichtlich des Hybridbauteils wird die Aufgabe durch die im Anspruch 1 angegebenen Merkmale gelöst.

Hinsichtlich des Verfahrens wird die Aufgabe durch die im Anspruch 12 angegebenen Merkmale gelöst.

Vorteilhafte Weiterbildungen der Erfindung sind Gegenstand der Unteransprüche.

Das erfindungsgemäße Hybridbauteil ist gekennzeichnet durch ein Profilbauteil aus einem ersten Material, das mit einem Bauteil aus einem zweiten Material abschnittsweise stoffschlüssig und außerhalb von Abschnitten mit stoffschlüssiger Verbindung mittels einer form- und/oder kraftschlüssigen Verbindung verbunden ist.

Beispielsweise ist ein Profilbauteil aus einem ersten Material auf einem als Blech ausgebildetes Bauteil aus einem zweiten Material mittels einer Klebeverbindung aufgeklebt und/oder mittels einer Nietverbindung vernietet. Somit sind auf einfache Weise sogenannte Hybridbauteile aus unterschiedlichen Werkstoffen herstellbar, wobei eine besonders hohe Steifigkeit des erfindungsgemäßen Hybridbauteils in einer Großserienproduktion erzielbar ist.

In einer ersten Ausführungsvariante ist das Profilbauteil, welches einen u-förmigen Querschnitt und beidseitig jeweils einen im Wesentlichen ebenen Flanschbereich aufweist, mit seinen Flanschbereichen derart auf dem im Wesentlichen ebenen Bauteil aufgesetzt, dass zwischen Profilbauteil und ebenem Bauteil ein Innenraum gebildet ist, wobei zwischen dem Bauteil und den Flanschbereichen ein Adhäsionsmaterial, insbesondere ein Kleber, abschnittsweise angeordnet ist und außerhalb der mit Adhäsionsmaterial versehenen Abschnitte der Flanschbereiche als kraft- und/oder formschlüssige Verbindung Nietverbindungen ausgebildet sind. Auf diese Weise ist eine im Stand der Technik übliche großflächige stoffschlüssige Verbindung zwischen Profilbauteil und im Wesentlichen ebenen Bauteil vermieden. Besonders vorteilhafterweise sind die aus einer solchen großflächigen stoffschlüssigen Verbindung und den unterschiedlichen thermischen Ausdehnungen der Werkstoffe von Profilbauteil und ebenem Bauteil resultierenden Oberflächenunebenheiten, wie beispielweise Beulen oder Wellen, im Hybridbauteil sicher vermieden. Vorteilhafterweise ist die Klebeverbindung mittels mehrerer unlösbarer Nietverbindungen zusätzlich gesichert.

Vorteilhafterweise sind in einem an den Innenraum angrenzenden Bereich des Bauteils entlang einer Längsausdehnung des Hybridbauteils gleichmäßig voneinander beabstandete Rundlöcher oder Langlöcher im Bauteil ausgeformt. Mittels der definiert in dem Bauteil eingebrachten Rundlöcher oder Langlöcher werden die unterschiedlichen thermischen Spannungen zwischen dem Profilbauteil und dem Bauteil abgebaut und somit Oberflächenunebenheiten im Hybridbauteil verhindert. Weiterhin ist mittels der Rundlöcher oder Langlöcher das Gewicht des Bauteils und daraus resultierend des gesamten Hybridbauteils verringert.

Dabei können die Langlöcher in ihrer Längsausdehnung bevorzugt korrespondierend zur Längsausdehnung des Hybridbauteils ausgerichtet sein oder die Langlöcher sind im Bauteil in ihrer Längsausdehnung quer zur Längsausdehnung des Hybridbauteils ausgerichtet.

Die Rundlöcher oder die Langlöcher sind zweckmäßigerweise nebeneinander in Richtung der Längsausdehnung des Hybridbauteils angeordnet.

In einer alternativen Ausführungsvariante sind die mit Kleber versehenen, insbesondere beschichteten Abschnitte der Flanschbereiche durch Bereiche, in denen Langlöcher angeordnet sind, unterbrochen, wobei die Langlöcher im Bauteil und/oder im Flanschbereich des Profilbauteils ausgebildet sind und wobei die Langlöcher in ihrer Längsausdehnung korrespondierend zur Längsausdehnung des Flanschbereichs ausgerichtet sind. Somit sind in den Flanschbereichen abwechselnd Nietverbindungen, mit Kleber versehene Abschnitte und Langlöcher angeordnet, wodurch die im Stand der Technik üblichen langen Klebeverbindungen vermieden sind.

In einer weiteren Ausführungsvariante ist im Bauteil zumindest eine Verprägung angeordnet, welche entlang einer Längsausdehnung des Hybridbauteils in dem Bereich des Bauteils ausgeformt ist, welcher an den Innenraum angrenzt. Durch die Verprägung wird insbesondere eine Biegesteifigkeit des Hybridbauteils signifikant erhöht.

In einer weiteren bevorzugten Ausführungsvariante sind im Bauteil mehrere Verprägungen angeordnet, welche sich quer zur Längsausdehnung des Hybridbauteils über das gesamte Bauteil erstrecken, wobei im Bereich der Verprägungen kein Kleber in den Flanschbereichen angeordnet ist. Somit sind in den Flanschbereichen abwechselnd Nietverbindungen, mit Kleber versehene Abschnitte und Verprägungen angeordnet.

In einer weiteren zweckmäßigen Ausführungsvariante sind im Bauteil mehrere x-förmig über das gesamte Bauteil verlaufende Verprägungen angeordnet, wobei im Bereich der Verprägungen kein Kleber in den Flanschbereichen angeordnet ist. Dadurch sind in den Flanschbereichen abwechselnd Nietverbindungen, mit Kleber versehene Abschnitte und Verprägungen angeordnet, wodurch im Stand der Technik übliche lange Klebeverbindungen vermieden sind und mittels der x-förmigen Verprägungen insbesondere eine Biegesteifigkeit des Hybridbauteils signifikant erhöht ist.

In einer weiteren Ausführungsvariante sind in einem an den Innenraum angrenzenden Bereich des Bauteils entlang einer Längsausdehnung des Hybridbauteils gleichmäßig voneinander beabstandete kreisförmige Verprägungen im Bauteil ausgeformt. Mittels der definiert in dem Bauteil eingebrachten kreisförmigen Verprägungen werden die unterschiedlichen thermischen Spannungen zwischen dem Profilbauteil und dem im Wesentlichen ebenen oder flachen Bauteil abgebaut und somit Oberflächenunebenheiten im Hybridbauteil verhindert.

Besonders bevorzugt sind die Verprägungen nebeneinander in Richtung der Längsausdehnung des Hybridbauteils angeordnet.

In einer weiteren bevorzugten Ausführungsvariante sind die mit Kleber beschichteten Abschnitte der Flanschbereiche durch Bereiche, in denen kreisförmige Verprägungen im Flanschbereich angeordnet sind, unterbrochen, wobei die kreisförmigen Verprägungen jeweils im Bauteil und im Flanschbereich des Profilbauteils ausgebildet sind und wobei die kreisförmige Verprägungen von Bauteil und Flanschbereich deckungsgleich angeordnet sind. Die kreisförmigen Verprägungen im Bauteil und Flanschbereich ermöglichen eine vereinfachte Ausrichtung der Bauteile bei der Herstellung des Hybridbauteils und unterbrechen die mit Kleber versehenen Abschnitte der Flanschbereiche.

Beim Verfahren zur Herstellung eines Hybridbauteils wird erfindungsgemäß ein Profilbauteil aus einem ersten Material mit einem Bauteil aus einem zweiten Material abschnittsweise stoffschlüssig und außerhalb der Abschnitte mit stoffschlüssiger Verbindung form- und/oder kraftschlüssig verbunden.

Mittels des Verfahrens hergestellte Hybridbauteile sind vorteilhafterweise gewichtsreduziert und besonders biegesteif.

Besonders vorteilhafterweise sind mittels des vorliegenden Verfahrens Oberflächenunebenheiten, wie beispielweise Beulen oder Wellen, im Hybridbauteil sicher vermieden.

Daraus resultierend ist eine optische Oberflächenanmutung des Hybridbauteils verbessert.

Weiterhin ist eine Belastbarkeit der stoffschlüssigen Verbindung, insbesondere einer Klebeverbindung, des Hybridbauteils und somit des gesamten Hybridbauteils selbst erhöht.

Herkömmlicherweise auftretende Oberflächenunebenheiten bei Hybridbauteilen resultieren aus unterschiedlichen thermischen Ausdehnungen der Materialien des Hybridbauteils. Diese Spannungen innerhalb des Hybridbauteils sind bei einer Herstellung gemäß dem erfindungsgemäßen Verfahren vermieden oder werden abgebaut und unerwünschte Oberflächenunebenheiten treten nicht mehr auf.

Anhand der beigefügten schematischen Figuren wird die Erfindung näher erläutert.

Dabei zeigen:
- Figur 1: schematisch eine teiltransparente Draufsicht auf ein mittels des erfindungsgemäßen Verfahrens hergestelltes Hybridbauteil in einer ersten Ausführungsform,
- Figur 2: schematisch eine teiltransparente Draufsicht auf ein mittels des erfindungsgemäßen Verfahrens hergestelltes Hybridbauteil in einer zweiten Ausführungsform,
- Figur 3: schematisch eine teiltransparente Draufsicht auf ein mittels des erfindungsgemäßen Verfahrens hergestelltes Hybridbauteil in einer dritten Ausführungsform,
- Figur 4: schematisch eine teiltransparente Draufsicht auf ein mittels des erfindungsgemäßen Verfahrens hergestelltes Hybridbauteil in einer vierten Ausführungsform,
- Figur 5: schematisch eine teiltransparente Draufsicht auf ein mittels des erfindungsgemäßen Verfahrens hergestelltes Hybridbauteil in einer fünften Ausführungsform,
- Figur 6: schematisch eine teiltransparente Draufsicht auf ein mittels des erfindungsgemäßen Verfahrens hergestelltes Hybridbauteil in einer sechsten Ausführungsform,
- Figur 7: schematisch mehrere Querschnitte von unterschiedlichen Verprägungen,
- Figur 8: schematisch eine teiltransparente Draufsicht auf ein mittels des erfindungsgemäßen Verfahrens hergestelltes Hybridbauteil in einer siebten Ausführungsform,
- Figur 9: schematisch mehrere alternative Querschnitte von unterschiedlichen Verprägungen,
- Figur 10: schematisch eine perspektivische Darstellung der siebten Ausführungsform des Hybridbauteils,
- Figur 11: schematisch eine teiltransparente Draufsicht auf ein mittels des erfindungsgemäßen Verfahrens hergestelltes Hybridbauteil in einer achten Ausführungsform,
- Figur 12: schematisch eine Detailansicht eines Blechabschnitts der achten Ausführungsform des Hybridbauteils in einer perspektivischen Darstellung,
- Figur 13: schematisch eine teiltransparente Draufsicht auf ein mittels des erfindungsgemäßen Verfahrens hergestelltes Hybridbauteil in einer neunten Ausführungsform,
- Figur 14: schematisch eine Detailansicht der neunten Ausführungsform des Hybridbauteils in einer perspektivischen Darstellung,
- Figur 15: schematisch eine teiltransparente Draufsicht auf ein mittels des erfindungsgemäßen Verfahrens hergestelltes Hybridbauteil in einer zehnten Ausführungsform und
- Figur 16: schematisch eine Detailansicht der zehnten Ausführungsform des Hybridbauteils in einer perspektivischen und teiltransparenten Darstellung.

Einander entsprechende Teile sind in allen Figuren mit den gleichen Bezugszeichen versehen.

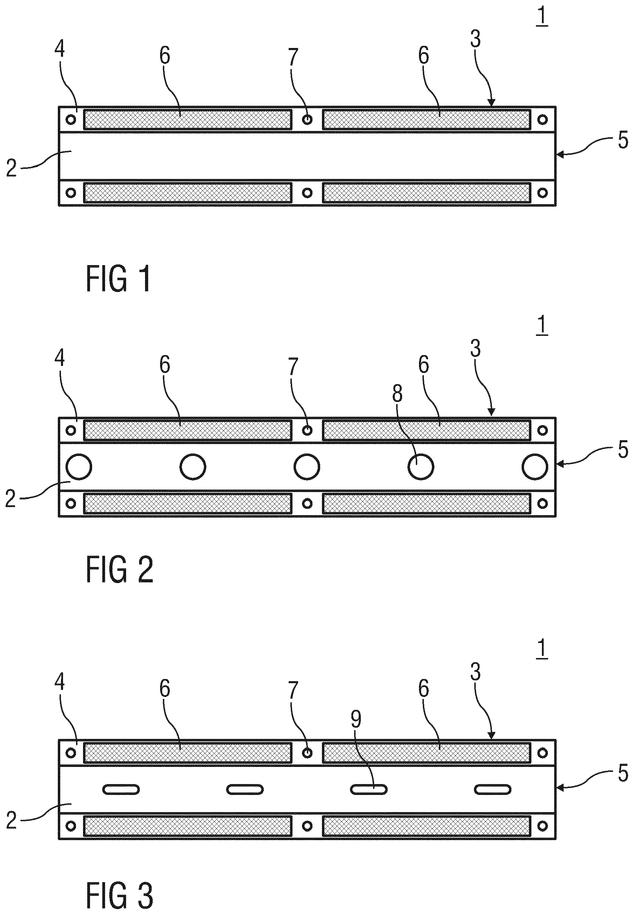

In Figur 1 ist schematisch eine teiltransparente Draufsicht auf ein mittels des erfindungsgemäßen Verfahrens hergestelltes Hybridbauteil 1 in einer ersten Ausführungsform dargestellt.

Das Hybridbauteil 1 ist vorzugsweise aus einem u-förmigen Profilbauteil 2 und einem Bauteil 3 gebildet.

Das Profilbauteil 2 und das Bauteil 3 sind aus unterschiedlichen Materialien, beispielsweise Aluminium, Stahl oder Kunststoff, gebildet.

Am u-förmigen Profilbauteil 2 ist beidseitig jeweils ein im Wesentlichen ebener Flanschbereich 4 ausgeformt.

Das Bauteil 3 ist als ein herkömmliches flaches oder ebenes Blech ausgeformt, auf welchen das u-förmige Profilbauteil 2 mit seinen Flanschbereichen 4 derart aufgesetzt wird, dass zwischen Profilbauteil 2 und Bauteil 3 ein Innenraum 5 gebildet ist. Das flache Bauteil 3 wird im Weiteren zur besseren Übersichtlichkeit als Blechabschnitt 3 bezeichnet.

Das Profilbauteil 2 und der Blechabschnitt 3 sind abschnittsweise stoffschlüssig und außerhalb der Abschnitte mit stoffschlüssiger Verbindung form- und/oder kraftschlüssig miteinander verbunden.

In einer möglichen Ausführungsform ist zwischen dem Blechabschnitt 3 und den Flanschbereichen 4 ein Adhäsionsmaterial 6, insbesondere ein Kleber oder ein Lötmaterial, abschnittsweise angeordnet. Das Adhäsionsmaterial 6 wird im Weiteren Kleber 6 genannt.

Zusätzlich sind das Profilbauteil 2 und der Blechabschnitt 3 außerhalb der Abschnitte mit dem Kleber 6 mittels einer form- und/oder kraftschlüssigen Verbindung 7, insbesondere mittels mehrerer unlösbarer Nietverbindungen, miteinander verbunden. Im Weiteren wird die form- und/oder kraftschlüssige Verbindung 7 Nietverbindung 7 genannt.

Im Verlauf des Flanschbereichs 4 sind Nietverbindungen 7 und mit Kleber 6 versehene, insbesondere beschichtete Abschnitte in der in Figur 1 dargestellten Weise abwechselnd angeordnet. Insbesondere im Bereich der Nietverbindungen 7 ist kein Kleber 6 angeordnet.

Auf diese Weise ist eine im Stand der Technik übliche großflächige stoffschlüssige Verbindung zwischen Profilbauteil 2 und Blechabschnitt 3 vermieden. Besonders vorteilhafterweise sind die aus einer solchen großflächigen stoffschlüssigen Verbindung und den unterschiedlichen thermischen Ausdehnungen der Werkstoffe von Profilbauteil 2 und Blechabschnitt 3 resultierenden Oberflächenunebenheiten, wie beispielweise Beulen oder Wellen, im Hybridbauteil 1 sicher vermieden.

Die Nietverbindung 7 ist als herkömmliche Nietverbindung, beispielweise als Stanznietverbindung, ausgebildet.

In Figur 2 ist schematisch eine teiltransparente Draufsicht auf das mittels des erfindungsgemäßen Verfahrens hergestellte Hybridbauteil 1 in einer zweiten Ausführungsform dargestellt.

Figur 2 zeigt einen zur Figur 1 sehr ähnlichen Aufbau des Hybridbauteils 1, jedoch mit dem Unterschied, dass im Blechabschnitt 3 mehrere Rundlöcher 8 angeordnet sind.

Die Rundlöcher 8 sind vorzugweise entlang einer Längsausdehnung des Hybridbauteils 1 in dem Bereich des Blechabschnitts 3 in selbigem ausgeformt, welcher an den Innenraum 5 angrenzt. Die Rundlöcher 8 sind gleichmäßig voneinander beabstandet und sind beispielsweise gebohrt oder gestanzt.

Mittels der definiert in den Blechabschnitt 3 eingebrachten Rundlöcher 8 werden die unterschiedlichen thermischen Spannungen zwischen dem Profilbauteil 2 und dem Blechabschnitt 3 abgebaut und somit Oberflächenunebenheiten im Hybridbauteil 1 verhindert. Weiterhin ist mittels der Rundlöcher 8 ein Gewicht des Blechabschnitts 3 und daraus resultierend des gesamten Hybridbauteils 1 verringert.

In Figur 3 ist schematisch eine teiltransparente Draufsicht auf das mittels des erfindungsgemäßen Verfahrens hergestellte Hybridbauteil 1 in einer dritten Ausführungsform dargestellt.

Figur 3 zeigt einen zur Figur 2 sehr ähnlichen Aufbau des Hybridbauteils 1, jedoch mit dem Unterschied, dass im Blechabschnitt 3 anstelle der Rundlöcher 8 mehrere Langlöcher 9 angeordnet sind.

Die Langlöcher 9 sind vorzugsweise entlang einer Längsausdehnung des Hybridbauteils 1 in dem Bereich des Blechabschnitts 3 in selbigem ausgeformt, welcher an den Innenraum 5 angrenzt, und gleichmäßig voneinander beabstandet. Die Langlöcher 9 sind in ihrer Längsausdehnung korrespondierend zur Längsausdehnung des Hybridbauteils 1 ausgerichtet.

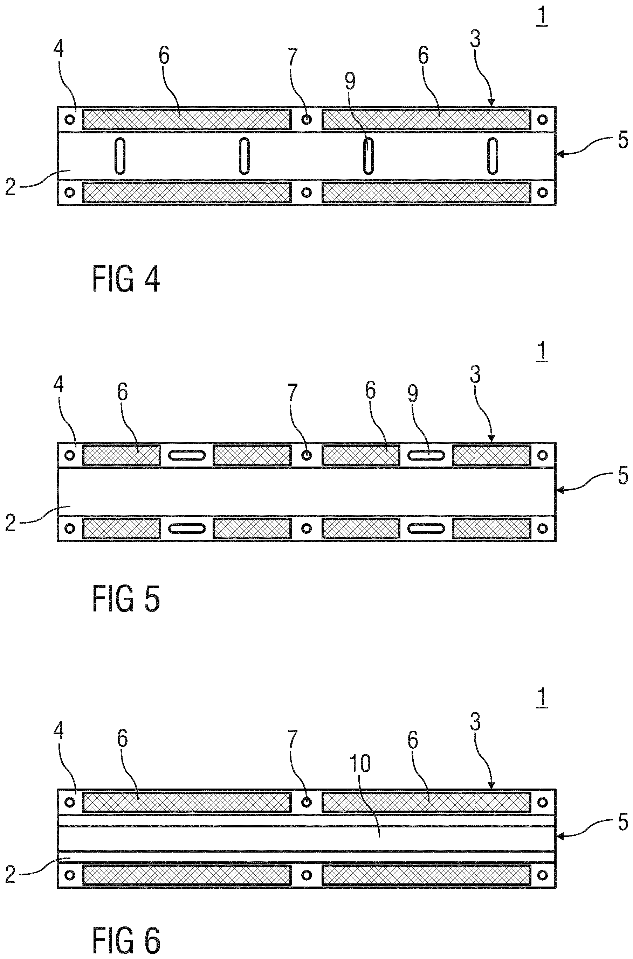

In Figur 4 ist schematisch eine teiltransparente Draufsicht auf das mittels des erfindungsgemäßen Verfahrens hergestellte Hybridbauteil 1 in einer vierten Ausführungsform dargestellt.

Figur 4 zeigt einen zur Figur 3 sehr ähnlichen Aufbau des Hybridbauteils 1, jedoch mit dem Unterschied, dass die Langlöcher 9 im Blechabschnitt 3 in ihrer Längsausdehnung quer zur Längsausdehnung des Hybridbauteils 1 ausgerichtet sind.

In Figur 5 ist schematisch eine teiltransparente Draufsicht auf das mittels des erfindungsgemäßen Verfahrens hergestellte Hybridbauteil 1 in einer fünften Ausführungsform dargestellt.

Figur 5 zeigt einen zur Figur 1 sehr ähnlichen Aufbau des Hybridbauteils 1, jedoch mit dem Unterschied, dass die mit Kleber 6 beschichteten Abschnitte der Flanschbereiche 4 durch Bereiche, in denen Langlöcher 9 angeordnet sind, unterbrochen werden.

Somit sind in den Flanschbereichen 4 abwechselnd Nietverbindungen 7, mit Kleber 6 beschichtete Abschnitte und Langlöcher 9 angeordnet.

Die Langlöcher 9 sind in ihrer Längsausdehnung korrespondierend zur Längsausdehnung des Flanschbereichs 4 ausgerichtet. Im Bereich der Langlöcher 9 ist kein Kleber 6 zwischen Blechabschnitt 3 und Profilbauteil 2 angeordnet. Die Langlöcher 9 können sowohl im Blechabschnitt 3 als auch im Profilbauteil 2 ausgebildet werden.

In einer besonders vorteilhaften Ausführungsform sind die Langlöcher 9 im Blechabschnitt 3 korrespondierend zu den entsprechenden Langlöchern 9 im Profilbauteil 2 ausgebildet und im Hybridbauteil 1 deckungsgleich angeordnet.

In Figur 6 ist schematisch eine teiltransparente Draufsicht auf das mittels des erfindungsgemäßen Verfahrens hergestellte Hybridbauteil 1 in einer sechsten Ausführungsform dargestellt.

Figur 6 zeigt einen zur Figur 1 sehr ähnlichen Aufbau des Hybridbauteils 1, jedoch mit dem Unterschied, dass im Blechabschnitt 3 zumindest eine Verprägung 10 angeordnet ist.

Die Verprägung 10 ist vorzugsweise entlang einer Längsausdehnung des Hybridbauteils 1 in dem Bereich des Blechabschnitts 3 in selbigem ausgeformt, welcher an den Innenraum 5 angrenzt.

Die Verprägung 10 erstreckt sich in Richtung der Längsausdehnung des Hybridbauteils 1 und erhöht dessen Steifigkeit. Durch die Verprägung 10 wird insbesondere die Biegesteifigkeit des Hybridbauteils 1 signifikant erhöht.

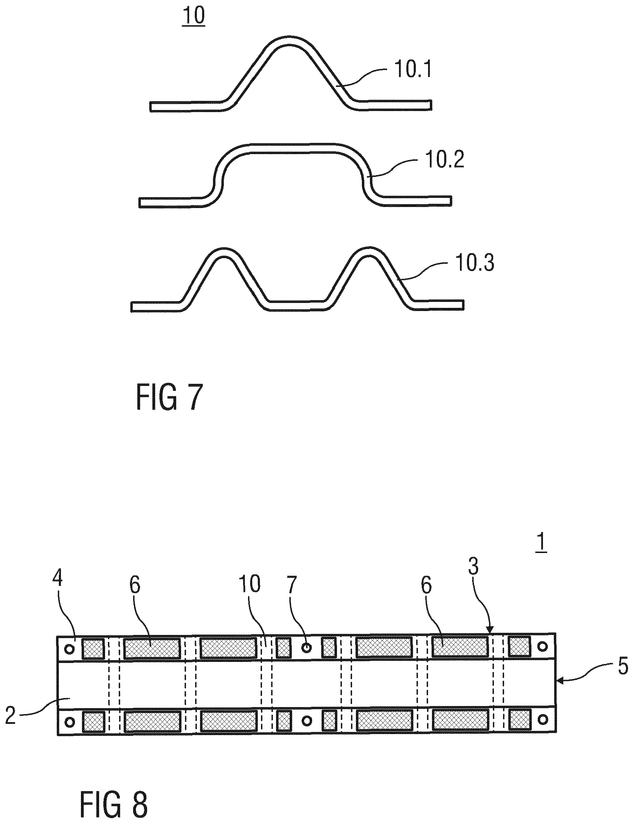

Figur 7 zeigt schematisch mehrere Querschnittsvarianten von unterschiedlichen Verprägungen 10.

Die Verprägungen 10 sind beispielsweise als herkömmliche Sicke 10.1, Doppelsicke 10.3 oder Vertiefung 10.2 ausgeformt und werden mittels eines Prägeverfahrens in den Blechabschnitt 3 eingebracht.

In Figur 8 ist schematisch eine teiltransparente Draufsicht auf das mittels des erfindungsgemäßen Verfahrens hergestellte Hybridbauteil 1 in einer siebten Ausführungsform dargestellt.

Figur 8 zeigt einen zu den Figuren 1 und 6 sehr ähnlichen Aufbau des Hybridbauteils 1, jedoch mit dem Unterschied, dass im Blechabschnitt 3 mehrere Verprägungen 10 angeordnet sind, welche sich quer zur Längsausdehnung des Hybridbauteils 1 erstrecken.

Die Verprägungen 10 sind quer über den gesamten Blechabschnitt 3 angeordnet, so dass die mit Kleber 6 beschichteten Abschnitte der Flanschbereiche 4 durch Bereiche, in denen Verprägungen 10 verlaufen, unterbrochen werden. Im Bereich der Verprägungen 10 ist kein Kleber 6 in den Flanschbereichen 4 angeordnet. Somit sind in den Flanschbereichen 4 abwechselnd Nietverbindungen 7, mit Kleber 6 beschichtete Abschnitte und Verprägungen 10 angeordnet.

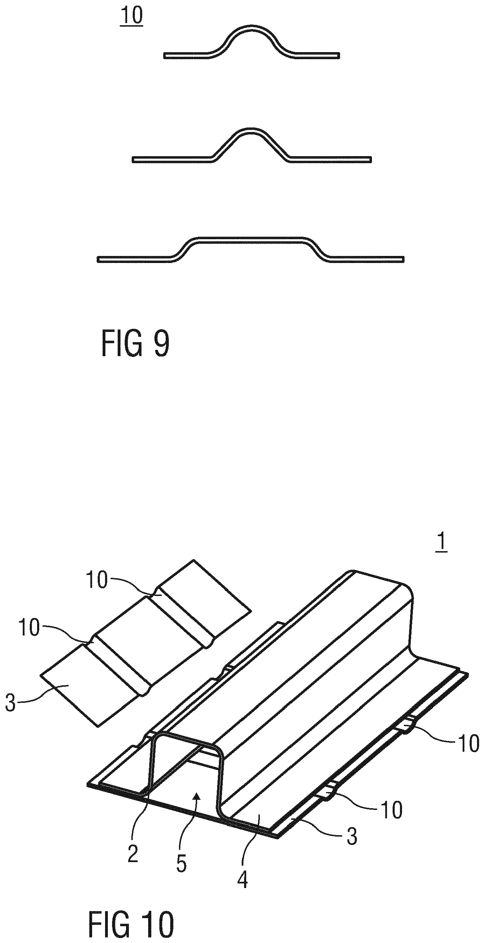

Figur 9 zeigt schematisch weitere Querschnittsvarianten von unterschiedlichen Verprägungen 10.

Figur 10 zeigt schematisch eine perspektivische Darstellung der in Figur 8 dargestellten siebten Ausführungsform des Hybridbauteils 1.

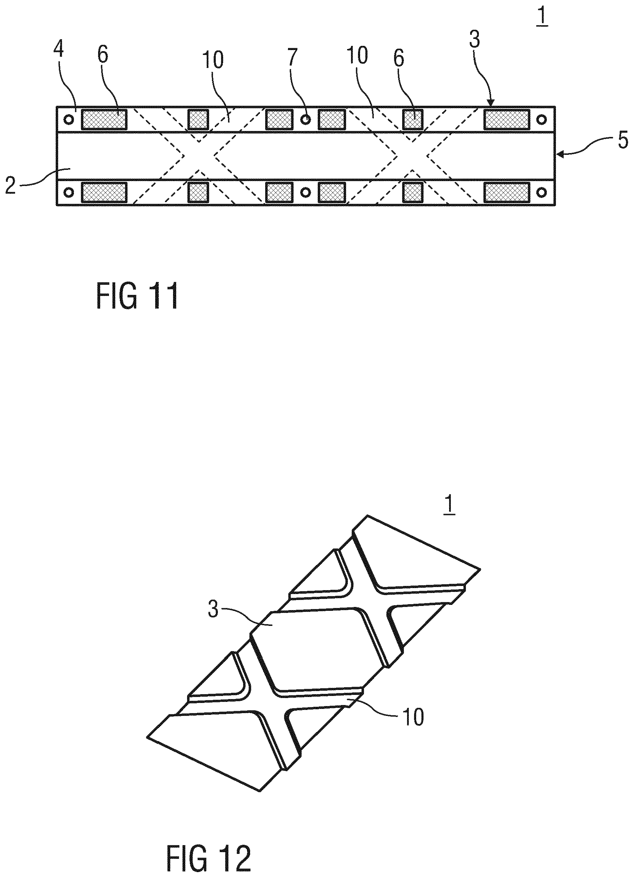

In Figur 11 ist schematisch eine teiltransparente Draufsicht auf das mittels des erfindungsgemäßen Verfahrens hergestellte Hybridbauteil 1 in einer achten Ausführungsform dargestellt.

Figur 11 zeigt einen zu den Figuren 6 und 7 sehr ähnlichen Aufbau des Hybridbauteils 1, jedoch mit dem Unterschied, dass die Verprägungen 10 im Blechabschnitt 3 x-förmig angeordnet sind.

Die Verprägungen 10 sind derart x-förmig über den gesamten Blechabschnitt 3 verlaufend angeordnet, dass die mit Kleber 6 beschichteten Abschnitte der Flanschbereiche 4 durch Bereiche, in denen die Verprägungen 10 verlaufen, unterbrochen werden.

Im Bereich der Verprägungen 10 ist kein Kleber 6 in den Flanschbereichen 4 angeordnet. Daraus resultierend sind in den Flanschbereichen 4 abwechselnd Nietverbindungen 7, mit Kleber 6 beschichtete Abschnitte und Verprägungen 10 angeordnet.

In Figur 12 ist schematisch eine Detailansicht des Blechabschnitts 3 mit den x-förmigen Verprägungen 10 der achten Ausführungsform des Hybridbauteils 1 in einer perspektivischen Darstellung abgebildet.

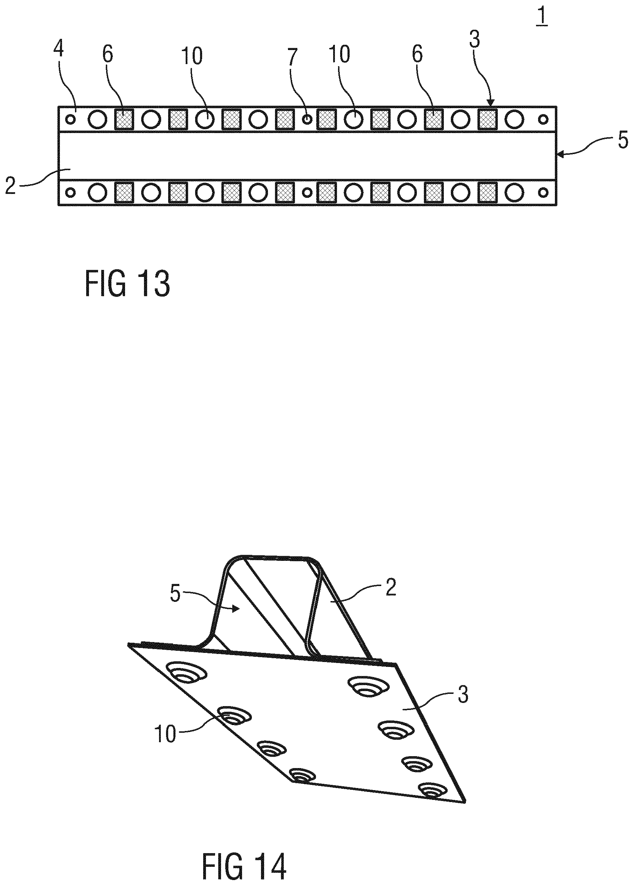

In Figur 13 ist schematisch eine teiltransparente Draufsicht auf das mittels des erfindungsgemäßen Verfahrens hergestellte Hybridbauteil 1 in einer neunten Ausführungsform dargestellt.

Figur 13 zeigt einen zu Figur 5 sehr ähnlichen Aufbau des Hybridbauteils 1, jedoch mit dem Unterschied, dass anstelle der Langlöcher 9 in Figur 5 kreisförmige Verprägungen 10 im Flanschbereich 4 angeordnet sind.

Somit sind in den Flanschbereichen 4 abwechselnd Nietverbindungen 7, mit Kleber 6 beschichtete Abschnitte und kreisförmige Verprägungen 10 angeordnet. Im Bereich der Verprägungen 10 ist kein Kleber 6 zwischen Blechabschnitt 3 und Profilbauteil 2 angeordnet. Die Verprägungen 10 sind im Blechabschnitt 3 korrespondierend zu den entsprechenden Verprägungen 10 im Profilbauteil 2 ausgebildet und im Hybridbauteil 1 deckungsgleich angeordnet.

Figur 14 zeigt schematisch eine Detailansicht der in Figur 13 abgebildeten neunten Ausführungsform des Hybridbauteils 1 in einer perspektivischen Darstellung.

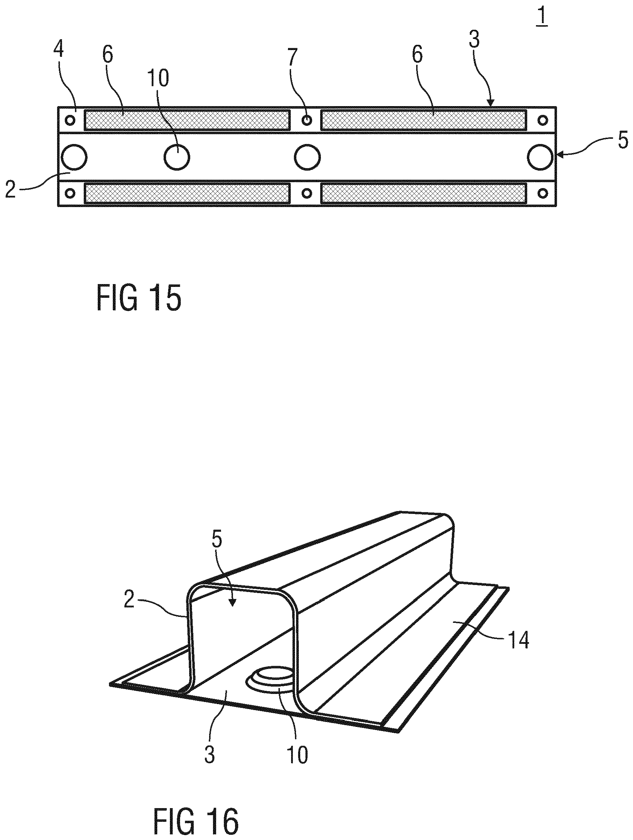

In Figur 15 ist schematisch eine teiltransparente Draufsicht auf das mittels des erfindungsgemäßen Verfahrens hergestellte Hybridbauteil 1 in einer zehnten Ausführungsform dargestellt.

Figur 15 zeigt einen zu Figur 6 sehr ähnlichen Aufbau des Hybridbauteils 1, jedoch mit dem Unterschied, dass anstelle der einzelnen zentralen Verprägung 10 in Figur 3 zahlreiche kreisförmige Verprägungen 10 im Blechabschnitt 3 angeordnet sind.

Die kreisförmigen Verprägungen 10 sind in dem Bereich des Blechabschnitts 3 in selbigem ausgeformt, welcher an den zwischen Blechabschnitt 3 und Profilbauteil 2 gebildeten Innenraum 5 des Hybridbauteils 1 angrenzt. Die kreisförmigen Verprägungen 10 sind in gleichmäßigem Abstand nebeneinander in Richtung der Längsausdehnung des Hybridbauteils 1 angeordnet.

In Figur 16 ist schematisch eine Detailansicht der in Figur 15 abgebildeten zehnten Ausführungsform des Hybridbauteils 1 in einer perspektivischen und teiltransparenten Darstellung abgebildet.

### Bezugszeichenliste

- 1: Hybridbauteil
- 2: Profilbauteil
- 3: Bauteil
- 4: Flanschbereich
- 5: Innenraum
- 6: Adhäsionsmaterial
- 7: Form- und/oder kraftschlüssige Verbindung
- 8: Rundloch
- 9: Langloch
- 10: Verprägung
- 10.1: Sicke
- 10.2: Vertiefung
- 10.3: Doppelsicke

## Patentansprüche

1. Hybridbauteil (1) umfassend ein Profilbauteil (2) aus einem ersten Material und ein Bauteil (3) aus einem zweiten Material, **dadurch gekennzeichnet, dass** das Profilbauteil (2) mit dem Bauteil (3) abschnittsweise stoffschlüssig und außerhalb von Abschnitten mit stoffschlüssiger Verbindung mittels einer form- und/oder kraftschlüssigen Verbindung (7) verbunden ist, wobei das Profilbauteil (2), welches einen u-förmigen Querschnitt und beidseitig jeweils einen im Wesentlichen ebenen Flanschbereich (4) aufweist, mit seinen Flanschbereichen (4) derart auf einen ebenen Abschnitt des Bauteils (3) aufgesetzt ist, dass zwischen Profilbauteil (2) und Bauteil (3) ein Innenraum (5) gebildet ist, wobei zwischen dem Bauteil (3) und den Flanschbereichen (4) ein Adhäsionsmaterial (6), insbesondere ein Kleber abschnittsweise angeordnet ist und außerhalb der mit Adhäsionsmaterial (6) versehenen Abschnitte form- und/oder kraftschlüssige Verbindungen (7) zwischen dem Bauteil (3) und den Flanschbereichen (4) als Nietverbindungen ausgebildet sind.

2. Hybridbauteil (1) nach Anspruch 1,
**dadurch gekennzeichnet, dass** in einem an den Innenraum (5) angrenzenden Bereich des Bauteils (3) entlang einer Längsausdehnung des Hybridbauteils (1) gleichmäßig voneinander beabstandete Rundlöcher (8) oder Langlöcher (9) ausgeformt sind.

3. Hybridbauteil (1) nach Anspruch 2,
**dadurch gekennzeichnet, dass** die Langlöcher (9) in ihrer Längsausdehnung korrespondierend zur Längsausdehnung des Hybridbauteils (1) ausgerichtet sind oder dass die Langlöcher (9) im Bauteil (3) in ihrer Längsausdehnung quer zur Längsausdehnung des Hybridbauteils (1) ausgerichtet sind.

4. Hybridbauteil (1) nach Anspruch 2 oder 3,
**dadurch gekennzeichnet, dass** die Rundlöcher (8) oder Langlöcher (9) nebeneinander in Richtung der Längsausdehnung des Hybridbauteils (1) angeordnet sind.

5. Hybridbauteil (1) nach einem der Ansprüche 2 bis 4,
**dadurch gekennzeichnet, dass** die mit Adhäsionsmaterial (6) versehenen Abschnitte der Flanschbereiche (4) durch Bereiche, in denen Langlöcher (9) angeordnet sind, unterbrochen sind, wobei die Langlöcher (9) im Bauteil (3) und/oder im Flanschbereich (4) des Profilbauteils (2) ausgebildet sind und wobei die Langlöcher (9) in ihrer Längsausdehnung korrespondierend zur Längsausdehnung des Flanschbereichs (4) ausgerichtet sind.

6. Hybridbauteil (1) nach Anspruch 1,
**dadurch gekennzeichnet, dass** im Bauteil (3) zumindest eine Verprägung (10) angeordnet ist, welche entlang einer Längsausdehnung des Hybridbauteils (1) in dem Bereich des Bauteils (3) ausgeformt ist, welcher an den Innenraum (5) angrenzt.

7. Hybridbauteil (1) nach Anspruch 1,
**dadurch gekennzeichnet, dass** quer zur Längsausdehnung des Hybridbauteils (1) über das gesamte Bauteil (3) mehrere Verprägungen (10) angeordnet sind, wobei im Bereich der Verprägungen (10) kein Adhäsionsmaterial (6) in den Flanschbereichen (4) angeordnet ist.

8. Hybridbauteil (1) nach Anspruch 1,
**dadurch gekennzeichnet, dass** im Bauteil (3) mehrere x-förmig über das gesamte Bauteil (3) verlaufende Verprägungen (10) angeordnet sind, wobei im Bereich der Verprägungen (10) kein Adhäsionsmaterial (6) in den Flanschbereichen (4) angeordnet ist.

9. Hybridbauteil (1) nach Anspruch 1,
**dadurch gekennzeichnet, dass** in einem an den Innenraum (5) angrenzenden Bereich des Bauteils (3) entlang einer Längsausdehnung des Hybridbauteils (1) gleichmäßig voneinander beabstandete kreisförmige Verprägungen (10) im Bauteil (3) ausgeformt sind.

10. Hybridbauteil (1) nach einem der Ansprüche 7 bis 9,
**dadurch gekennzeichnet, dass** die Verprägungen (10) nebeneinander in Richtung der Längsausdehnung des Hybridbauteils (1) angeordnet sind.

11. Hybridbauteil (1) nach Anspruch 1,
**dadurch gekennzeichnet, dass** die mit Adhäsionsmaterial (6) versehenen Abschnitte der Flanschbereiche (4) durch Bereiche, in denen kreisförmige Verprägungen (10) im Flanschbereich (4) angeordnet sind, unterbrochen sind, wobei die kreisförmigen Verprägungen (10) jeweils im Bauteil (3) und im Flanschbereich (4) des Profilbauteils (2) ausgebildet sind und wobei die kreisförmigen Verprägungen (10) von Bauteil (3) und Flanschbereich (4) deckungsgleich angeordnet sind.

12. Verfahren zur Herstellung eines Hybridbauteils (1) umfassend ein Profilbauteil (2) aus einem ersten Material und ein Bauteil (3) aus einem zweiten Material,
**dadurch gekennzeichnet, dass** das Profilbauteil (2) mit dem Bauteil (3) abschnittsweise stoffschlüssig und außerhalb von Abschnitten mit stoffschlüssiger Verbindung mittels einer form- und/oder kraftschlüssigen Verbindung (7) verbunden wird, wobei das Profilbauteil (2), welches einen u-förmigen Querschnitt und beidseitig jeweils einen im Wesentlichen ebenen Flanschbereich (4) aufweist, mit seinen Flanschbereichen (4) derart auf einen ebenen Abschnitt des Bauteils (3) aufgesetzt wird, dass zwischen Profilbauteil (2) und Bauteil (3) ein Innenraum (5) gebildet wird, wobei zwischen dem Bauteil (3) und den Flanschbereichen (4) ein Adhäsionsmaterial (6), insbesondere ein Kleber, abschnittsweise angeordnet wird und außerhalb der mit Adhäsionsmaterial (6) versehenen Abschnitte form- und/oder kraftschlüssige Verbindungen (7) zwischen dem Bauteil (3) und den Flanschbereichen (4) als Nietverbindungen ausgebildet werden.

## Claims

1. Hybrid component (1) comprising a profiled component (2) made of a first material and a component (3) made of a second material, **characterized in that** the profiled component (2) is partially connected by a material bond to the component (3) and is connected by means of a form-fit and/or force-fit connection (7) outside the portions with the material bond connection, wherein the profiled component (2), which has a U-shaped cross section and in each case has a substantially planar flange region (4) on both sides, is placed with its flange regions (4) on a planar portion of the component (3), such that an internal space (5) is formed between the profiled component (2) and the component (3), wherein between the component (3) and the flange regions (4) an adhesive material (6), in particular an adhesive, is partially arranged and form-fit and/or force-fit connections (7) are formed between the component (3) and the flange regions (4) as riveted connections outside the portions provided with adhesive material (6).

2. Hybrid component (1) according to Claim 1, **characterized in that** in a region of the component (3) adjoining the internal space (5), round holes (8) or elongated holes (9) uniformly spaced apart from one another are formed along a longitudinal extent of the hybrid component (1).

3. Hybrid component (1) according to Claim 2, **characterized in that** the elongated holes (9) are aligned in their longitudinal extent according to the longitudinal extent of the hybrid component (1) or that the elongated holes (9) are aligned in the component (3) in their longitudinal extent transversely to the longitudinal extent of the hybrid component (1).

4. Hybrid component (1) according to Claim 2 or 3, **characterized in that** the round holes (8) or elongated holes (9) are arranged adjacent to one another in the direction of the longitudinal extent of the hybrid component (1).

5. Hybrid component (1) according to one of Claims 2 to 4, **characterized in that** the portions of the flange regions (4) provided with adhesive material (6) are interrupted by regions in which elongated holes (9) are arranged, wherein the elongated holes (9) are formed in the component (3) and/or in the flange region (4) of the profiled component (2), and wherein the elongated holes (9) are aligned in their longitudinal extent according to the longitudinal extent of the flange region (4).

6. Hybrid component (1) according to Claim 1, **characterized in that** at least one embossed portion (10) is arranged in the component (3), said embossed portion being formed along a longitudinal extent of the hybrid component (1) in the region of the component (3) which adjoins the internal space (5) .

7. Hybrid component (1) according to Claim 1, **characterized in that** a plurality of embossed portions (10) are arranged transversely to the longitudinal extent of the hybrid component (1) over the entire component (3), wherein in the region of the embossed portions (10) no adhesive material (6) is arranged in the flange regions (4).

8. Hybrid component (1) according to Claim 1, **characterized in that** a plurality of x-shaped embossed portions (10) are arranged in the component (3), extending over the entire component (3), wherein in the region of the embossed portions (10) no adhesive material (6) is arranged in the flange regions (4).

9. Hybrid component (1) according to Claim 1, **characterized in that** in a region of the component (3) adjoining the internal space (5), circular embossed portions (10) uniformly spaced apart from one another are formed in the component (3) along a longitudinal extent of the hybrid component (1).

10. Hybrid component (1) according to one of Claims 7 to 9, **characterized in that** the embossed portions (10) are arranged adjacent to one another in the direction of the longitudinal extent of the hybrid component (1).

11. Hybrid component (1) according to Claim 1, **characterized in that** the portions of the flange regions (4) provided with adhesive material (6) are interrupted by regions in which circular embossed portions (10) are arranged in the flange region (4), wherein the circular embossed portions (10) in each case are formed in the component (3) and in the flange region (4) of the profiled component (2), and wherein the circular embossed portions (10) of the component (3) and flange region (4) are arranged in a congruent manner.

12. Method for producing a hybrid component (1) comprising a profiled component (2) made of a first material and a component (3) made of a second material, **characterized in that** the profiled component (2) is partially connected by a material bond to the component (3) and is connected by means of a form-fit and/or force-fit connection (7) outside the portions with the material bond connection, wherein the profiled component (2), which has a U-shaped cross section and in each case has a substantially planar flange region (4) on both sides, is placed with its flange regions (4) on a planar portion of the component (3), such that an internal space (5) is formed between the profiled component (2) and the component (3), wherein between the component (3) and the flange regions (4) an adhesive material (6), in particular an adhesive, is partially arranged and form-fit and/or force-fit connections (7) are formed between the component (3) and the flange regions (4) as riveted connections outside the portions provided with adhesive material (6).

## Revendications

1. Composant hybride (1) comprenant un composant profilé (2) en un premier matériau et un composant (3) en un deuxième matériau, **caractérisé en ce que** le composant profilé (2) est relié avec le composant (3) en sections par accouplement de matière et en dehors de sections présentant une liaison par accouplement de matière par une liaison par accouplement de formes et/ou par force (7), le composant profilé (2), qui présente une section transversale en forme de U et à chaque fois une zone de bride essentiellement plate (4) des deux côtés, étant disposé avec ses zones de bride (4) sur une section plate du composant (3) de telle sorte qu'un espace intérieur (5) soit formé entre le composant profilé (2) et le composant (3), un matériau d'adhésion (6), notamment une colle, étant agencé en sections entre le composant (3) et les zones de bride (4) et, en dehors des sections munies de matériau d'adhésion (6), des liaisons par accouplement de formes et/ou par force (7) entre le composant (3) et les zones de bride (4) étant configurées sous la forme de liaisons rivetées.

2. Composant hybride (1) selon la revendication 1, **caractérisé en ce que** des trous ronds (8) ou des trous allongés (9) espacés uniformément les uns des autres sont formés dans une zone du composant (3) adjacente à l'espace intérieur (5) le long d'une dimension longitudinale du composant hybride (1).

3. Composant hybride (1) selon la revendication 2, **caractérisé en ce que** les trous allongés (9) sont orientés avec leur dimension longitudinale correspondant à la dimension longitudinale du composant hybride (1) ou **en ce que** les trous allongés (9) sont orientés dans le composant (3) avec leur dimension longitudinale perpendiculaire à la dimension longitudinale du composant hybride (1) .

4. Composant hybride (1) selon la revendication 2 ou 3, **caractérisé en ce que** les trous ronds (8) ou les trous allongés (9) sont agencés les uns à côté des autres dans la direction de la dimension longitudinale du composant hybride (1).

5. Composant hybride (1) selon l'une quelconque des revendications 2 à 4, **caractérisé en ce que** les sections des zones de bride (4) munies de matériau d'adhésion (6) sont interrompues par des zones dans lesquelles des trous allongés (9) sont agencés, les trous allongés (9) étant formés dans le composant (3) et/ou dans la zone de bride (4) du composant profilé (2) et les trous allongés (9) étant orientés avec leur dimension longitudinale correspondant à la dimension longitudinale de la zone de bride (4).

6. Composant hybride (1) selon la revendication 1, **caractérisé en ce qu'**au moins un estampage (10) est agencé dans le composant (3), lequel est formé le long d'une dimension longitudinale du composant hybride (1) dans la zone du composant (3) qui est adjacente à l'espace intérieur (5).

7. Composant hybride (1) selon la revendication 1, **caractérisé en ce que** plusieurs estampages (10) sont agencés perpendiculairement à la dimension longitudinale du composant hybride (1) sur l'ensemble du composant (3), aucun matériau d'adhésion (6) n'étant agencé dans les zones de bride (4) dans la zone des estampages (10).

8. Composant hybride (1) selon la revendication 1, **caractérisé en ce que** plusieurs estampages (10) en forme de x passant sur l'ensemble du composant (3) sont agencés dans le composant (3), aucun matériau d'adhésion (6) n'étant agencé dans les zones de bride (4) dans la zone des estampages (10).

9. Composant hybride (1) selon la revendication 1, **caractérisé en ce que** des estampages circulaires (10) espacés uniformément les uns des autres sont formés dans le composant (3) dans une zone du composant (3) adjacente à l'espace intérieur (5) le long d'une dimension longitudinale du composant hybride (1).

10. Composant hybride (1) selon l'une quelconque des revendications 7 à 9, **caractérisé en ce que** les estampages (10) sont agencés les uns à côté des autres dans la direction de la dimension longitudinale du composant hybride (1).

11. Composant hybride (1) selon la revendication 1, **caractérisé en ce que** les sections des zones de bride (4) munies de matériau d'adhésion (6) sont interrompues par des zones dans lesquelles des estampages circulaires (10) sont agencés dans la zone de bride (4), les estampages circulaires (10) étant à chaque fois formés dans le composant (3) et dans la zone de bride (4) du composant profilé (2) et les estampages circulaires (10) du composant (3) et de la zone de bride (4) étant agencés en coïncidence.

12. Procédé de fabrication d'un composant hybride (1) comprenant un composant profilé (2) en un premier matériau et un composant (3) en un deuxième matériau,
**caractérisé en ce que** le composant profilé (2) est relié avec le composant (3) en sections par accouplement de matière et en dehors de sections présentant une liaison par accouplement de matière par une liaison par accouplement de formes et/ou par force (7), le composant profilé (2), qui présente une section transversale en forme de U et à chaque fois une zone de bride essentiellement plate (4) des deux côtés, étant disposé avec ses zones de bride (4) sur une section plate du composant (3) de telle sorte qu'un espace intérieur (5) soit formé entre le composant profilé (2) et le composant (3), un matériau d'adhésion (6), notamment une colle, étant agencé en sections entre le composant (3) et les zones de bride (4) et, en dehors des sections munies de matériau d'adhésion (6), des liaisons par accouplement de formes et/ou par force (7) entre le composant (3) et les zones de bride (4) étant configurées sous la forme de liaisons rivetées.
